# EUROPEAN PATENT APPLICATION

(11) **EP 2 998 125 A1**
(43) Date of publication of application: **23.03.2016**
(21) Application number: 15185731.5
(22) Date of filing: 17.09.2015
(51) Int. Cl.: B41M 5/50, B41M 5/52, B32B 27/00, G03G 7/00

(54) **PRINTING SHEET AND METHOD OF MANUFACTURING SAME**

(30) Priority: 18.09.2014 JP 2014190483
(71) Applicant: Lintec Corporation, Tokyo 173-0001 (JP)
(72) Inventor: MIYATAKE, Yusuke, Tokyo, 173-0001 (JP); KONDO, Takeshi, Tokyo, 173-0001 (JP)
(74) Representative: Nicholls, Michael John

(57) **Abstract**

A printing sheet comprising: a base material comprising an olefin-based resin; and an ink receiving layer laminated on one surface side of the base material, characterized that the ink receiving layer comprises a styrene-based thermoplastic elastomer, the styrene-based thermoplastic elastomer satisfies at least one of the following condition 1 and condition 2: (Condition 1) A styrene-containing ratio is 15 mass% or more, the styrene-containing ratio being a mass ratio of monomer of a styrene-based compound to a total monomer used for forming the styrene-based thermoplastic elastomer. (Condition 2) The styrene-based thermoplastic elastomer is a non-perfectly hydrogenated styrene-based thermoplastic elastomer. The printing sheet is obtained in which the cured ink is unlikely to delaminate from the base material and the productivity can be enhanced. In addition, a method is provided which manufactures the above printing sheet at high productivity and with a low possibility of quality degradation.

## Description

### [Technical Field]

The present invention relates to a printing sheet and a method of manufacturing the same.

As used in the present description, the term "sheet" encompasses the concept of a tape and the concept of a film.

### [Background Art]

In a printing sheet used for various types of printing, a sheet of a resin-based material (referred also to as a "resin-based sheet," hereinafter) has been used as a base material. In general, when the base material of a printing sheet is formed of a resin-based sheet, an ink receiving layer is provided on a surface of the base material in order to enhance the adhesion to the ink. As used in the present description, the term "ink receiving layer" refers to a layer which is laminated on the base material for the purpose of suppressing the delamination of the cured ink from the base material and of which the surface at the opposite side to the side facing the base material is a surface to be in contact with the ink.

In recent years, demand for flexographic printing is increasing in printing industry, in which the mainstream of an ink for the flexographic printing is a UV (ultraviolet curable-type) ink. In the flexographic printing, however, a large amount of reactive diluent is added to reduce the viscosity of ink, compared with the case of ordinary printing such as offset printing. Therefore, when the flexographic printing is performed using a UV ink, the extent of curing contraction of the ink is large to lead to a problem in that the cured ink is likely to drop off from the base material of the printing sheet. As such, there is a demand for a printing sheet which can follow the curing contraction of a UV ink due to its curing and has excellent adhesion to the UV ink even when the flexographic printing is performed using the UV ink.

To this end, Patent Literature 1 discloses a printable film under an object to provide a printable film, particularly a printable polymer film, which has the superior properties required of printable films, and particularly has superior adhesive properties with radiation cured ink (such as UV ink) . The printable film comprises a substrate and at least a surface layer. The surface layer covers at least one face of the substrate and consists essentially of 10-98% of a water-dispersible polymer and 2-90% of an ethylenically unsaturated compound selected from polyfunctional acrylates resulting from the esterification of a polyol with (meth)acrylic acid or polyallyl derivatives. When a radiation curable ink is applied to the surface layer and radiations are then applied to cure the ink, the ethylenically unsaturated compound reacts with unsaturated compounds of the radiation curable ink, and this reaction forms chemical bonds between those compounds and simultaneously crosslinks the surface layer.

### [Prior Art Literature]

### [Patent Literature]

[Patent Literature 1] Japan Patent No. 4027977

### [Summary of the Invention]

### [Problems to be solved by the Invention]

The mainstream of a raw material for the base material of a printing sheet will possibly be a resin-based sheet of an olefin-based resin, such as typified by a biaxially oriented polypropylene (OPP) film, in view of the production stability, cost, and mechanical properties (in particular flexibility). In this case, the interfacial adhesion tends to be poor between the base material of the printing sheet and an ink receiving layer formed on the base material because the polarity of the base material is low at the surface part compared with that of a resin-based sheet of polyester-based resin which is now typically used as a resin-based sheet to be the raw material for the base material. On the other hand, as previously described, the contraction amount at the time of UV curing is large in a UV ink used in the flexographic printing method which is considered to be the future mainstream. Accordingly, a printing sheet may possibly be required in which the cured ink is unlikely to delaminate from the base material even when using such a base material having a low polarity and a UV ink.

According to the above technique disclosed in Patent Literature 1, the surface layer (ink receiving layer) of the above film disclosed in Patent Literature 1 is formed using an aqueous dispersion liquid. Therefore, a step of applying the aqueous dispersion liquid and a step of drying the applied film of the aqueous dispersion liquid are required for the ink receiving layer to be formed. A manufacturing method including such a wet process has limitations in enhancing the productivity of printing sheets.

The present invention has been created in view of such actual circumstances as described above, and an object of the present invention is to provide a printing sheet in which the cured ink is unlikely to delaminate from the base material and the productivity can be enhanced even when using a olefin-based base material having a low polarity and a UV ink having a large extent of the curing contraction. Another object of the present invention is to provide a method of manufacturing such a printing sheet.

Specific examples of the cases in which "the cured ink is unlikely to delaminate from the base material" include a case in which delamination is unlikely to occur at the interface between the cured ink and the ink receiving layer, a case in which cohesive fracture is unlikely to occur in the ink receiving layer, and a case in which delamination is unlikely to occur at the interface between the ink receiving layer and the base material.

### [Means for solving the Problems]

As a result of studies to achieve the above objects, the present inventors have acquired a novel knowledge that a printing sheet can be obtained in which the cured ink is unlikely to delaminate from the base material and the productivity can be enhanced, by using a styrene-based thermoplastic elastomer as a part of material that constitutes the ink receiving layer and by the styrene-based thermoplastic elastomer satisfying at least one of the following condition 1 and condition 2:
(Condition 1) A styrene-containing ratio is 15 mass% or more, wherein the styrene-containing ratio is a mass ratio of monomer of a styrene-based compound to a total monomer used for forming the styrene-based thermoplastic elastomer.
(Condition 2) The styrene-based thermoplastic elastomer is a non-perfectly hydrogenated styrene-based thermoplastic elastomer.

As used in the present description, the term "styrene-based thermoplastic elastomer" means a material comprising a polymer that contains a constitutional unit derived from styrene or its derivatives (styrene-based compound) and having rubber-like elasticity in a temperature range including an ordinary temperature while having thermoplasticity. The term "non-perfectly hydrogenated styrene-based thermoplastic elastomer" as used herein means a styrene-based thermoplastic elastomer in which hydrogenation is not perfectly performed, and specific examples thereof include a non-hydrogenated styrene-based thermoplastic elastomer and a partially hydrogenated styrene-based thermoplastic elastomer.

As used in the present description, the term "styrene-containing ratio" means a mass ratio of monomer of a styrene-based compound to a total monomer used for forming the styrene-based thermoplastic elastomer, as previously described.

The present invention accomplished based on the above knowledge is as follows:
(1) A printing sheet comprising: a base material comprising an olefin-based resin; and an ink receiving layer laminated on one surface side of the base material, characterized in that the ink receiving layer comprises a styrene-based thermoplastic elastomer, the styrene-based thermoplastic elastomer satisfies at least one of the following condition 1 and condition 2:
   (Condition 1) A styrene-containing ratio is 15 mass% or more, the styrene-containing ratio being a mass ratio of monomer of a styrene-based compound to a total monomer used for forming the styrene-based thermoplastic elastomer.
   (Condition 2) The styrene-based thermoplastic elastomer is a non-perfectly hydrogenated styrene-based thermoplastic elastomer.
   It is preferred that the base material comprises a thermoplastic resin.
(2) The printing sheet as described in the above (1), wherein the styrene-based thermoplastic elastomer satisfies both of the condition 1 and the condition 2.
(3) The printing sheet as described in the above (1) or (2), wherein the styrene-containing ratio is 80 mass% or less.
(4) The printing sheet as described in any one of the above (1) to (3), wherein the ink receiving layer and the base material are laminated so as to be directly in contact with each other.
(5) A method of manufacturing the printing sheet as described in the above (4), the method comprising manufacturing the ink receiving layer by extrusion molding of a resin-based composition for forming the ink receiving layer, wherein the printing sheet is obtained as a laminate of the base material and the ink receiving layer.
(6) The method of manufacturing the printing sheet as described in the above (5), wherein the printing sheet is obtained by coextrusion molding of a resin-based composition for forming the base material and the resin-based composition for forming the ink receiving layer.

### [Advantageous Effect of the Invention]

According to the present invention, a printing sheet is obtained in which the cured ink is unlikely to delaminate from the base material and the productivity can be enhanced. In addition, according to the present invention, a method is provided which manufactures the above printing sheet at high productivity and with a low possibility of quality degradation. [Embodiments for Carrying out the Invention]

Embodiments of the present invention will hereinafter be described.

### 1. Printing Sheet

A printing sheet according to an embodiment of the present invention comprises a base material and an ink receiving layer laminated on one surface side of the base material.

### (1) Base Material

Material for the base material of the printing sheet according to the present embodiment comprises an olefin-based resin.

As used in the present description, the term "olefin-based resin" means a homopolymer or a copolymer obtained by polymerizing one or more kinds selected from olefin monomers. Examples of the olefin monomers include olefin monomers having a carbon number of 2 to 8, α-olefin monomers having a carbon number of 3 to 18, and olefin monomers having a cyclic structure. Examples of the olefin monomers having a carbon number of 2 to 8 include ethylene, propylene, 2-butene, and octene. Examples of the α-olefin monomers include propylene, 1-butene, 4-methyl-1-pentene, 1-hexene, 1-octene, 1-decene, 1-dodecene, 1-tetradecene, and 1-octadecene. Examples of the olefin monomers having a cyclic structure include norbornene, cyclopentadiene, cyclohexadiene, dicyclopentadiene, and tetracyclododecene, and derivatives thereof.

When the olefin-based resin contains polyethylene, the polyethylene may be any of high-density polyethylene, medium-density polyethylene, low-density polyethylene, ultralow-density polyethylene, and linear low-density polyethylene, and may also be a mixture of two or more kinds thereof.

Specific examples of the olefin-based resin of copolymer include: polyethylene-based resin, such as ethylene-propylene copolymer, ethylene-vinyl acetate copolymer, ethylene-vinyl acetate-maleic anhydride copolymer, ethylene-(meth)acrylic acid copolymer, ethylene-butyl acrylate copolymer, and ethylene-(meth)acrylic ester-maleic anhydride copolymer; polypropylene-based resin, such as propylene-ethylene-diene compound copolymer; acid-modified polyolefin; and ionomer-based resin.

When the olefin-based resin contains ethylene-propylene copolymer, the ethylene-propylene copolymer may be any of block polymer and random polymer, and may also be a mixture thereof.

One kind of the olefin-based resin may be solely used, or two or more kinds may also be used in a mixture.

The base material may be constituted of a single layer film that contains the above resin-based material, or may also be constituted of a multilayer obtained by laminating a plurality of films each containing the resin-based material. When the base material is formed of a film or films, the film or films may not be oriented, or may also be monoaxially or biaxially oriented such as in the longitudinal and/or lateral directions.

The material that constitutes the base material may contain a coloring material (examples thereof include pigment, such as carbon black and titanium dioxide, and colorant) thereby to color the base material. In view of enhancing the mechanical properties and imparting the blocking resistance, the material that constitutes the base material may contain fine particles, such as silica.

As previously described, the tendency is increasing in recent years that a polyolefin-based resin of which the primary agent is a polyolefin resin is employed as the primary component of a material that constitutes the base material, in view of the production stability, cost, and mechanical properties (in particular flexibility). Specific examples of such a resin include polyethylene and polypropylene. Among various types of polypropylene, a biaxially oriented polypropylene (i.e., OPP) is focused on considering the production stability, cost, and properties such as flexibility, as previously described. However, the interfacial adhesion may readily deteriorate between the base material and an ink receiving layer formed on one surface of the base material because the polarity of resin is low in such a polyolefin-based resin material. Even in such a case, the delamination is unlikely to occur at the interface between the ink receiving layer and the base material because, in the printing sheet according to the present embodiment, the ink receiving layer has specific properties as will be described later.

The thickness of the base material is not particularly restricted, but may ordinarily be about 20 µm or more and 300 µm or less, and preferably 25 µm or more and 200 µm or less.

### (2) Ink Receiving Layer

The printing sheet according to the present embodiment comprises an ink receiving layer that comprises a styrene-based thermoplastic elastomer.

Examples of the styrene-based thermoplastic elastomer include styrene-conjugate diene copolymer and styrene-olefin copolymer. Specific examples of the styrene-conjugate diene copolymer include: non-hydrogenated styrene-conjugate diene copolymers, such as styrene-butadiene copolymer (SBR), styrene-butadiene-styrene copolymer (SBS), styrene-butadiene-butylene-styrene copolymer, styrene-isoprene copolymer, styrene-isoprene-styrene copolymer (SIS), and styrene-ethylene-isoprene-styrene copolymer; and hydrogenated styrene-conjugate diene copolymers, such as styrene-ethylene/propylene-styrene copolymer (SEPS, hydrogenated product of styrene-isoprene-styrene copolymer (SIS)) and styrene-ethylene-butylene-styrene copolymer (SEBS, hydrogenated product of styrene-butadiene copolymer). Examples of the commercially available products in the industrial field include Tufprene (registered trademark) available from Asahi Kasei Corp., Kraton (registered trademark) available from Kraton Polymer Japan, Sumitomo TPE-SB available from Sumitomo Chemical Company, Limited, Epofriend (registered trademark) available from Daicel Corporation, Rabalon (registered trademark) available from Mitsubishi Chemical Corporation, Septon (registered trademark) available from KURARAY O., LTD., and Tuftec (registered trademark) available from Asahi Kasei Corp.

The styrene-based thermoplastic elastomer contained in the ink receiving layer according to an embodiment of the present invention may be a hydrogenated product or a non-hydrogenated product provided that the conditions are satisfied as described later. Being a hydrogenated product may enhance the affinity to the base material which contains the polyolefin-based resin. Examples of the hydrogenated product of the styrene-based thermoplastic elastomer include hydrogenated styrene-conjugate diene copolymers, such as styrene-ethylene-butylene-styrene copolymer (SEBS, hydrogenated product of styrene-butadiene copolymer (SBS)) and styrene-ethylene/propylene-styrene copolymer (SEPS, hydrogenated product of styrene-isoprene copolymer (SIS)). When the styrene-based thermoplastic elastomer contained in the ink receiving layer according to an embodiment of the present invention is a hydrogenated product, it may be a perfectly hydrogenated product or a partially hydrogenated product provided that the conditions are satisfied as described later.

The styrene-based thermoplastic elastomer contained in the ink receiving layer according to an embodiment of the present invention satisfies at least one of the following condition 1 and condition 2:
(Condition 1) The styrene-containing ratio is 15 mass% or more.
(Condition 2) The styrene-based thermoplastic elastomer is a non-perfectly hydrogenated styrene-based thermoplastic elastomer.

In other words, the styrene-based thermoplastic elastomer contained in the ink receiving layer according to an embodiment of the present invention may fall under cases except those in which the styrene-containing ratio is less than 15 mass% and the styrene-based thermoplastic elastomer is a perfectly hydrogenated styrene-based thermoplastic elastomer.

Owing to the feature that the styrene-containing ratio is 15 mass% or more in the styrene-based thermoplastic elastomer contained in the ink receiving layer according to an embodiment of the present invention, the ink receiving layer can be manufactured by extrusion molding, as will be described later, and the presence of the ink receiving layer can realize an effect that the cured ink is unlikely to delaminate from the base material. If the styrene-containing ratio is less than 15 mass%, it may be difficult to manufacture the ink receiving layer by extrusion molding.

The styrene-containing ratio will be affected such as by the extent of hydrogenation of the styrene-based thermoplastic elastomer, materials that constitute the base material, and the type of ink, but may preferably be 20 mass% or more, more preferably 25 mass% or more, further preferably 30 mass% or more, and particularly preferably 35 mass% or more. The upper limit of the styrene-containing ratio is not limited. In view of stably enhancing the delamination resistance of the ink receiving layer to the olefin-based base material, the styrene-containing ratio may preferably be 80 mass% or less, more preferably 75 mass% or less, further preferably 70 mass% or less, and particularly preferably 65 mass% or less.

Owing to the feature that the styrene-based thermoplastic elastomer contained in the ink receiving layer according to an embodiment of the present invention is a non-perfectly hydrogenated styrene-based thermoplastic elastomer, it can be realized that the cured ink is unlikely to delaminate from the base material. The non-perfectly hydrogenated styrene-based thermoplastic elastomer can be categorized into a partially hydrogenated styrene-based thermoplastic elastomer and a non-hydrogenated styrene-based thermoplastic elastomer. When the non-perfectly hydrogenated styrene-based thermoplastic elastomer is a non-hydrogenated styrene-based thermoplastic elastomer, a tendency may readily be observed that the cured ink is unlikely to delaminate from the base material even if the styrene-containing ratio is relatively low.

The styrene-based thermoplastic elastomer contained in the ink receiving layer according to the present embodiment may satisfy both of the above conditions 1 and 2. That is, the styrene-based thermoplastic elastomer may be a non-perfectly hydrogenated styrene-based thermoplastic elastomer in which the styrene-containing ratio is 15 mass% or more.

The ink receiving layer according to the present embodiment may contain, in addition to the above components, coloring material, such as colorant and pigment; antioxidant, such as anilide-based and phenol-based antioxidants; ultraviolet absorbent, such as benzophenone-based and benzotriazole-based ultraviolet absorbents; filler component, such as talc, titanium dioxide, silica and starch; plasticizer; antioxidant; light stabilizer; dispersant; leveling agent; and other additives. The contents of these components may be freely selected, but it is preferred that the total content of these components does not exceed 10 mass% to the ink receiving layer as a whole.

In view of merely enhancing the delamination resistance of the ink receiving layer to the base material, it is preferred that the ink receiving layer contains a resin-based material having a molecular weight of 1,000 or less, for example, as a tackifying resin (tackifier). Such a material, however, may deteriorate the extrusion moldability and cause a problem of blocking, etc. It is therefore preferred that the ink receiving layer according to an embodiment of the present invention does not contain such a tackifying resin (tackifier). Even though the ink receiving layer according to an embodiment of the present invention does not contain a tackifying resin (tackifier), the styrene-based thermoplastic elastomer as the primary material satisfies at least one of the previously-described conditions 1 and 2 thereby to reduce the possibility that the delamination occurs between the ink receiving layer and the base material.

The thickness of the ink receiving layer according to an embodiment of the present invention is not particularly limited, but may ordinarily be 1 µm or more and 100 µm or less. If this thickness is unduly small, the productivity of the ink receiving layer may possibly deteriorate, while unduly large thickness may possibly cause subsidiary problems, such as that the productivity deteriorates and the blocking resistance deteriorates. The thickness of the ink receiving layer may preferably be 2 µm or more and 50 µm or less, more preferably 4 µm or more and 40 µm or less, and furthermore preferably 6 µm or more and 20 µm or less.

It is preferred that the ink receiving layer according to an embodiment of the present invention is laminated on the base material so as to be directly in contact therewith because the ink receiving layer is constituted of a material suitable for being manufactured by extrusion molding. In this case, the extrusion molding may be performed using a composition for forming the ink receiving layer thereby to allow the printing sheet to be manufactured in a single step.

### (3) Evaluation of Delamination Resistance of Printed Image

When printing is performed using the printing sheet according to an embodiment of the present invention, a printed image can be obtained with excellent delamination resistance. In the present description, the delamination resistance of a printed image of the cured ink may be evaluated by the following method.

A printing sheet formed thereon with a printed image is left to stand for 24 hours under an environment of 23°C and a relative humidity of 50%. Thereafter, on the basis of the cross-cut tape method of JIS K 5400 8.5.2: 1990, a cross-cut area is created to have 100 squares with a cutting interval of 1 mm and cut lines of 11×11 on the surface of the printing sheet at the side formed with the printed image. When the number of squares remaining after peeling off the tape is x and the remaining ratio is represented by x/100, if the value of x/100 is 80/100 or more, the printed image can be determined to have excellent delamination resistance, and if the value of x/100 is 90/100 or more, the printed image can be determined to have particularly excellent delamination resistance.

### 2. Method of Manufacturing Printing Sheet

The method of manufacturing the printing sheet according to an embodiment of the present invention is not particularly limited. The printing sheet may preferably be manufactured by extrusion molding, as will be described below, because the ink receiving layer of the printing sheet according to an embodiment of the present invention is constituted of a material suitable for being manufactured by extrusion molding.

First, a resin-based composition for forming the ink receiving layer is prepared. The resin-based composition contains a styrene-based thermoplastic elastomer that satisfies at least one of the previously-described condition 1 and condition 2. Manufacturing the ink receiving layer by extrusion molding of the resin-based composition is included thereby to allow the printing sheet to be obtained as a laminate of the base material and the ink receiving layer. In this case, the printing sheet is obtained in which the ink receiving layer and the base material are laminated so as to be directly in contact with each other.

Here, the base material to be used may be preliminarily molded into a film-like form, or a resin-based composition for forming the base material may otherwise be prepared, and the printing sheet may be obtained by coextrusion molding of that resin-based composition and the resin-based composition for forming the ink receiving layer. The coextrusion molding may be preferred because in this case it can be expected to enhance the delamination resistance between the base material and the ink receiving layer.

In any of extrusion molding and coextrusion molding, the molding conditions may be appropriately set in accordance with the resin-based materials, the thicknesses of the ink receiving layer and the base material to be obtained, and so on.

### 3. Other Constitutional Elements

The printing sheet according to the present embodiment may comprise other constitutional elements than the above base material and ink receiving layer. Examples of such constitutional elements include a pressure sensitive adhesive layer formed on the surface of the base material at the opposite side to the surface on which the ink receiving layer is formed. The formation of such a pressure sensitive adhesive layer allows the printing sheet according to the present embodiment to be used as a pressure sensitive adhesive sheet for printing.

The pressure sensitive adhesive to be used in the pressure sensitive adhesive layer is not particularly limited, and any known pressure sensitive adhesive can be used, such as acrylic-based, polyester-based, rubber-based, and silicone-based pressure sensitive adhesives.

The pressure sensitive adhesive layer may be provided by applying a coating liquid for forming the pressure sensitive adhesive layer on the surface of the base material at the opposite side to the surface having the ink receiving layer, or a pressure sensitive adhesive layer with a release material may otherwise be formed by applying the above coating liquid to the release surface of a release material to form a pressure sensitive adhesive layer and attaching this pressure sensitive adhesive layer to the surface of the base material at the opposite side to the ink receiving layer side.

The method of forming the pressure sensitive adhesive layer is not particularly limited, and the pressure sensitive adhesive layer can be formed by an ordinary method, such as the gravure roll method and the roll knife method, for example.

In the present invention, the thickness of the pressure sensitive adhesive layer is not particularly restricted, but may ordinarily be within a range of 5 µm or more and 100 µm or less, and preferably within a range of 10 µm or more and 50 µm or less.

The surface of the pressure sensitive adhesive layer at the opposite side to the base material side may be exposed, but ordinarily a release material may be temporarily attached to that surface in order to protect the pressure sensitive adhesive layer until use.

The release material may comprise a sheet-like support substrate, and at least one surface of the release material may be formed as a release surface having releasability. This release surface may be the surface of a release agent layer, which is provided on a surface of a support substrate without releasability, at the opposite side to the support substrate side, or may otherwise be a surface of a support substrate having releasability.

Examples of the support substrate of the release material include papers, synthetic papers and resin-based films. Examples of the papers include glassine paper and polyethylene laminated paper. Examples of the resin-based films include films of polyolefin resins such as polyethylene resin and polypropylene resin, polyester resins such as polybutylene terephthalate resin and polyethylene terephthalate resin, acetate resins, polystyrene resins, and vinyl chloride resins. Examples of a release treatment agent that constitutes the release agent layer include silicone resin, alkyd resin, fluorine resin, and long-chain alkyl-containing resin. Examples of the support substrate of which the surface or surfaces have releasability include polyolefin resin films such as polypropylene resin film and polyethylene resin film, and a film obtained by laminating any of these polyolefin resin films on a paper or on another film.

The thickness of the support substrate of the release material is not particularly restricted, but may ordinarily be about 15 µm or more and 300 µm or less.

The embodiments heretofore explained are described to facilitate understanding of the present invention and are not described to limit the present invention. Therefore, it is intended that the elements disclosed in the above embodiments include all design changes and equivalents to fall within the technical scope of the present invention.

### [Examples]

Hereinafter, the present invention will be further specifically described with reference to examples, etc., but the scope of the present invention is not limited to these examples, etc.

### [Example 1]

A polypropylene ("Prime Polypro F-724NP" available from Prime Polymer Co., Ltd.) as a resin-based composition for forming the base material, and a non-hydrogenated styrene-based thermoplastic elastomer ("HYBRAR 5125" available from KURARAY CO., LTD., styrene-containing ratio of 20 mass%) as a resin-based composition for forming the ink receiving layer, were put into an extruder, and coextrusion molding was performed using a T-die to form a film. Printing sheet 1 was thus obtained as a laminate of the base material of 40 µm and the ink receiving layer of 10 µm.

### [Example 2]

Printing sheet 2 was obtained in the same manner as in Example 1 except that a partially hydrogenated styrene-based thermoplastic elastomer ("Tuftec P1500" available from Asahi Kasei Chemicals Corp., styrene-containing ratio of 30 mass%) was used as a resin-based composition for forming the ink receiving layer.

### [Example 3]

Printing sheet 3 was obtained in the same manner as in Example 1 except that a perfectly hydrogenated styrene-based thermoplastic elastomer ("Septon 2104" available from KURARAY CO., LTD., styrene-containing ratio of 65 mass%) was used as a resin-based composition for forming the ink receiving layer.

### [Example 4]

Printing sheet 4 was obtained in the same manner as in Example 1 except that a non-hydrogenated styrene-based thermoplastic elastomer ("Kraton D1117P" available from Kraton Polymer Japan, styrene-containing ratio of 17 mass%) was used as a resin-based composition for forming the ink receiving layer.

### [Comparative Example 1]

Printing sheet 5 was obtained in the same manner as in Example 1 except that a polypropylene ("Prime Polypro F-724NP" available from Prime Polymer Co., Ltd.) was used as a resin-based composition for forming the ink receiving layer.

### [Comparative Example 2]

Printing sheet 6 was obtained in the same manner as in Example 1 except that a perfectly hydrogenated styrene-based thermoplastic elastomer ("Septon 2004" available from Mitsui Chemicals, Inc., styrene-containing ratio of 18 mass%) was used as a resin-based composition for forming the ink receiving layer.

### [Comparative Example 3]

Printing sheet 7 was obtained in the same manner as in Example 1 except that an ethylene-vinyl acetate copolymer ("Evaflex EV260" available from DUPONT-MITSUI POLYCHEMICALS CO., LTD.,) was used as a resin-based composition for forming the ink receiving layer.

### [Comparative Example 4]

Printing sheet 8 was obtained in the same manner as in Example 1 except that a polyester ("Easter GN001" available from Eastman Chemical Company) was used as a resin-based composition for forming the ink receiving layer.

### [Comparative Example 5]

Printing sheet 9 was obtained in the same manner as in Example 1 except that an ethylene-methacrylic acid copolymer ("Nucrel N0903HC" available from DUPONT-MITSUI POLYCHEMICALS CO., LTD.,) was used as a resin-based composition for forming the ink receiving layer.

### [Comparative Example 6]

Printing sheet 10 was obtained in the same manner as in Example 1 except that a polystyrene ("GPPS 679" available from PS Japan Corporation) was used as a resin-based composition for forming the ink receiving layer.

### [Exemplary Test 1] <Evaluation of Delamination Resistance of UV ink>

### (Printing Conditions)

Printing was performed for the ink receiving layer of each printing sheet using a UV ink ("BEST CURE UV 161S Black" available from T&K TOKA CO., LTD) and a printer ("R-I Tester" available from Akira-Seisakusyo), and a printed image was obtained after UV irradiation (high-pressure mercury lamp of 200 mJ/cm²).

With regard to printing sheet 9, cracks occurred in the ink receiving layer when the printing job was performed, and the printing was not able to be appropriately performed. Therefore, the following evaluation of the delamination resistance was not performed for printing sheet 9.

### (Evaluation of Delamination Resistance of Printed Image formed of Cured Ink)

The printing sheet formed thereon with each printed image by performing the above printing was left to stand for 24 hours under an environment of 23°C and a relative humidity of 50%. Thereafter, on the basis of the cross-cut tape method of JIS K 5400 8.5.2: 1990, a cross-cut area was created to have 100 squares with a cutting interval of 1 mm and cut lines of 11×11 on the surface of the printing sheet at the side formed with the printed image. Then, the delamination resistance of the printing sheet to the cured ink was evaluated.

When the number of squares remaining after peeling off the tape was x, the remaining ratio was represented by x/100. If the value of x/100 was 80/100 or more, the printed image was determined to be acceptable. Evaluation results are listed in Table 1.

**[Table 1]**

| Number of Printing Sheet | Evaluation Result |
|---|---|
| 1 | 100/100 |
| 2 | 100/100 |
| 3 | 100/100 |
| 4 | 85/100 |
| 5 | 0/100 |
| 6 | 0/100 |
| 7 | 0/100 |
| 8 | 0/100 |
| 10 | 0/100 |

As listed in Table 1, the printing sheets of the examples, which satisfy the conditions of the present invention, are excellent in the productivity of the printing sheet, and the cured ink is unlikely to delaminate even though the base material of the printing sheet is a resin-based sheet of polyolefin-based resin.

### [Industrial Applicability]

The printing sheet of the present invention can be suitably used for various types of printing, including the flexographic printing, even though the base material of the printing sheet is a resin-based sheet of polyolefin-based resin, such as OPP, because an UV ink is unlikely to delaminate from the printing sheet.

## Claims

1. A printing sheet comprising: a base material comprising an olefin-based resin; and an ink receiving layer laminated on one surface side of the base material, **characterized in that**
the ink receiving layer comprises a styrene-based thermoplastic elastomer,
the styrene-based thermoplastic elastomer satisfies at least one of the following condition 1 and condition 2:
(Condition 1) A styrene-containing ratio is 15 mass% or more, the styrene-containing ratio being a mass ratio of monomer of a styrene-based compound to a total monomer used for forming the styrene-based thermoplastic elastomer.
(Condition 2) The styrene-based thermoplastic elastomer is a non-perfectly hydrogenated styrene-based thermoplastic elastomer.

2. The printing sheet as recited in claim 1, wherein the styrene-based thermoplastic elastomer satisfies both of the condition 1 and the condition 2.

3. The printing sheet as recited in claim 1 or 2, wherein the styrene-containing ratio is 80 mass% or less.

4. The printing sheet as recited in any one of claims 1 to 3, wherein the ink receiving layer and the base material are laminated so as to be directly in contact with each other.

5. A method of manufacturing the printing sheet as recited in claim 4, the method comprising manufacturing the ink receiving layer by extrusion molding of a resin-based composition for forming the ink receiving layer, wherein the printing sheet is obtained as a laminate of the base material and the ink receiving layer.

6. The method of manufacturing the printing sheet as recited in claim 5, wherein the printing sheet is obtained by coextrusion molding of a resin-based composition for forming the base material and the resin-based composition for forming the ink receiving layer.
